# FASCICULE DE BREVET EUROPEEN

(11) **EP 3 558 658 B1**
(45) Date de publication et mention de la délivrance du brevet: **17.09.2025**
(21) Numéro de dépôt: 17838047.3
(22) Date de dépôt: 20.12.2017
(51) Int. Cl.: B31D 5/00

(54) **DISPOSITIF DE DISTRIBUTION D'ÉLÉMENT DE CALAGE ET D'EMBALLAGE, PROCÉDÉ DE PRODUCTION**
VORRICHTUNG ZUR ABGABE EINER POLSTERUNG UND EINES VERPACKUNGSELEMENTS, VERFAHREN ZUR HERSTELLUNG DES ELEMENTS UND POLSTERUNGSELEMENT
DEVICE FOR DISPENSING A CUSHIONING AND PACKAGING ELEMENT, METHOD FOR PRODUCING THE ELEMENT

(30) Priorité: 22.12.2016 FR 1663234
(43) Date de publication de la demande: 30.10.2019
(73) Titulaire: GP System, 74940 Annecy-Le-Vieux (FR)
(72) Inventeur: Peterlini, Jacky, 74940 Annecy-le-Vieux (FR)
(74) Mandataire: KATZAROV S.A.
(86) Numéro de dépôt international: PCT/FR2017/053739
(87) Numéro de publication internationale: WO 2018/115746

(56) Documents cités:
- WO-A2-99/59807
- US-A- 4 717 613
- US-B1- 6 168 847

## Description

La présente invention concerne un dispositif de distribution d'éléments de calage et d'emballage, son procédé de mise en œuvre.

La présence d'élément de calage, protège et enveloppe les articles à empaqueter dans un carton. Ces calages permettent de combler les vides pour caler les objets à l'intérieur d'une caisse et ainsi d'absorber les chocs inhérents aux transports et aux éventuelles chutes.

De nombreux types de solutions de calage sont présents dans le domaine de l'emballage. La tendance générale est d'éliminer les matières non recyclables, et de se diriger vers des emballages en papier recyclé. Un tel dispositif de distribution d'éléments de calage, selon le préambule de la revendication 1 est connu du document WO 99/59807 A2.

Les éléments de calage en papier sont froissés de manière grossière, résultant en des propriétés mécaniques acceptables, mais non satisfaisantes.

La présente invention propose ainsi un dispositif de distribution selon la revendication 1, produisant des éléments de calage et d'emballage, permettant de pallier aux inconvénients précités.

Ainsi, le dispositif de distribution selon l'invention, d'élément de calage et d'emballage à partir d'au moins une bande de papier, comprend au moins deux moyens de guidage autour desquels au moins une bande de papier est enroulée, au moins un moyen d'entraînement et au moins un moyen de froissement d'au moins une bande de papier, tandis que les moyens de guidage s'étendent au-delà, à savoir en aval, d'au moins un moyen de froissement.

Ajoutons que les moyens de guidage sont des profilés longitudinaux.

Selon un mode de réalisation, le dispositif de distribution comprend un moyen de conformation en amont des moyens de guidage, qui permet le positionnement d'au moins une bande de papier autour desdits au moins deux moyens de guidage.

Selon le mode de réalisation précédent, le moyen de conformation se présente par un chemin fermé dont ses extrémités se chevauchent.

Selon un autre mode de réalisation, le moyen de conformation se présente par un chemin fermé dont ses extrémités sont localisées latéralement d'un même coté, à savoir que le chemin se présente sous une forme de C.

Selon les modes de réalisation précédents, les moyens de guidages sont compris dans l'espace intérieur délimité par le chemin.

Selon une caractéristique supplémentaire, le dispositif de distribution comprend un moyen d'insertion de la bande de papier en amont du moyen de conformation.

Selon la caractéristique précédente, le moyen d'insertion se présente par un profilé dirigé vers l'extérieur, dans le prolongement du chemin.

Selon un mode d'exécution, le dispositif de distribution comprend au moins un moyen de positionnement destiné à contraindre au moins une partie d'au moins une bande de papier entre deux moyens de guidage.

Selon le mode d'exécution précédent, l'extrémité inférieure du moyen de positionnement est localisée ou sensiblement localisé en correspondance des extrémités inférieures des moyens de guidage.

Selon des modes de réalisation préférés, au moins un moyen d'entraînement est localisé entre deux moyens de guidage, tandis qu'au moins un moyen de froissement est localisé entre deux moyens de guidage.

Selon une caractéristique complémentaire, les moyens de guidage comprennent deux parties de deux sections différentes, la plus petite section étant localisée en aval de la plus grande section.

Selon un mode de réalisation, un moyen d'entraînement comprend un train arrière et un train avant en aval du train arrière, tous deux en amont du moyen de froissement.

L'invention concerne également un procédé de production d'élément de calage et d'emballage en papier froissé selon la revendication 15, comprenant les étapes d'installation d'au moins une bande de papier en périphérie d'au moins deux moyens de guidage, de positionnement d'une partie de la bande de papier entre les moyens de guidage, de mise en mouvement de la bande de papier le long des moyens de guidage, et froissement de la bande de papier.

Il est également décrit un élément de calage et d'emballage comprenant au moins une feuille de papier froissée, formant au moins deux conduits longitudinaux délimitant une zone de liaison, tandis que les conduits longitudinaux comprennent chacun un corps creux intérieur continu, correspondant à un profilé intérieur longitudinal délimité par les extrémités intérieures des plis localisés à la périphérie des conduits longitudinaux.

Ajoutons qu'un corps creux a une section constante ou sensiblement constante sur l'intégralité ou sensiblement l'intégralité de son profilé longitudinal.

Notons qu'un corps creux se présente par un profilé longitudinal ayant une section transversale choisie parmi une forme circulaire, rectangulaire, carrée, oblongue, triangulaire ou hexagonale.

Précisons que la zone de liaison est constituée uniquement d'au moins deux pans de feuille froissée au moins longitudinalement.

Il est également décrit un consommable, destiné à la production d'un élément de calage et d'emballage est formé d'une bande de papier pliée en trois pans, dans laquelle ses extrémités latérales se chevauchent, caractérisé en ce que la bande de papier comprend des lignes de perforation transversales régulièrement réparties sur sa longueur.

Selon la caractéristique précédente la bande de papier est formée d'une pluralité d'épaisseur.

D'autres caractéristiques et avantages de l'invention se dégageront de la description qui va suivre en regard des dessins annexés qui ne sont donnés qu'à titre d'exemples non limitatifs.

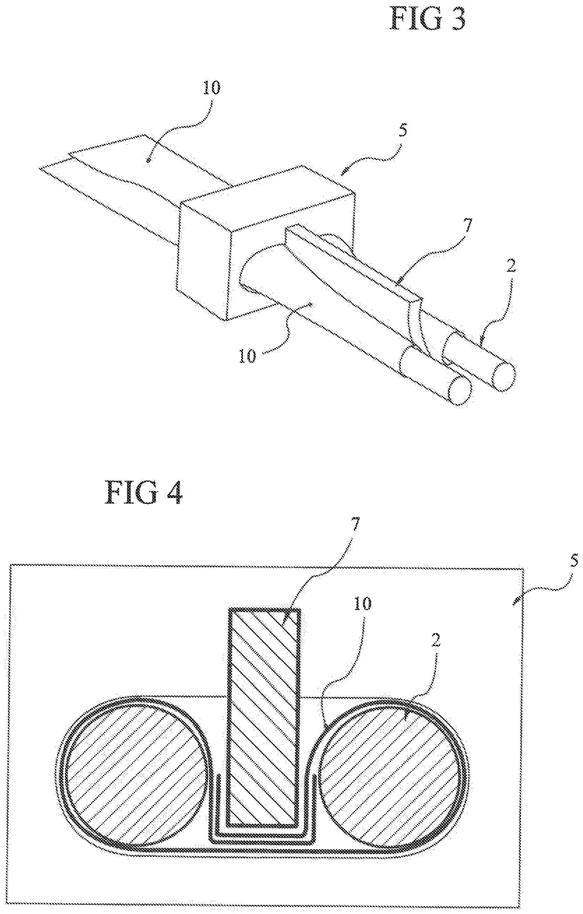

Les figures 1 à 9 sont des vues d'un dispositif de distribution d'élément de calage et d'emballage selon un mode de réalisation de l'invention.
La figure 1 est une vue en perspective.
La figure 2 est une vue en coupe selon A-A.
La figure 3 est une vue partielle en perspective.
La figure 4 est une vue en coupe selon B-B de la figure 2.
La figure 5 est une vue en coupe selon C-C de la figure 2.
La figure 6 est une vue en perspective d'un moyen d'insertion localisé dans le prolongement d'un moyen de conformation.
Les figures 7 à 9 sont des vues en perspective illustrant l'insertion d'une bande de papier dans le moyen d'insertion vers le moyen de conformation.
La figure 10a est une vue en perspective d'un élément de calage et d'emballage.
La figure 10b est une vue en perspective d'un élément de calage et d'emballage.
La figure 11 est une vue en perspective d'un consommable.

La présente invention concerne tout d'abord, un dispositif de distribution (1) d'élément de calage et d'emballage (9) à partir d'au moins une bande de papier (10).

Le dispositif de distribution (1) selon l'invention comprend au moins deux moyens de guidage (2) ayant chacun au moins une extrémité libre indépendante, autour au moins desquelles est enroulée au moins une bande de papier (10), tandis qu'il comprend un moyen d'entraînement (3) d'au moins une bande de papier (10), et au moins un moyen de froissement (4) d'au moins une bande de papier (10) en aval du moyen d'entraînement (3).

Selon une caractéristique, les moyens de guidage (2) ont des profils longitudinaux, tout du long desquels est enroulée au moins une bande de papier (10).

Selon la caractéristique précédente, les moyens de guidage (2) s'étendent tout du long de la mise en forme des éléments de calage et d'emballage (9) produits, à savoir que les moyens de guidage (2) s'étendent depuis la sortie du moyen de conformation (5) jusqu'au moyen de froissement (4), tel qu'explicité plus en détail dans la suite de la description.

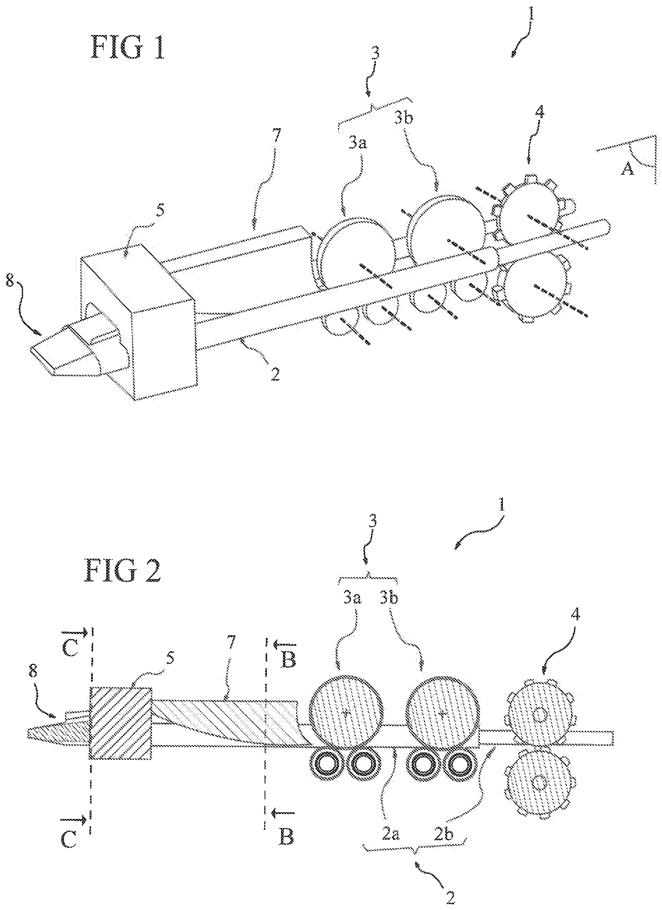

Les profils longitudinaux des moyens de guidage (2) peuvent avoir toute forme de section, telle que circulaire, rectangulaire, carrée, oblongue, voire triangulaire ou hexagonale, de préférence circulaire telle qu'illustrée notamment à la figure 1.

Selon la caractéristique précédente, les moyens de guidage (2) sont orientés dans une même direction de manière parallèle.

Selon le mode de réalisation illustré, les moyens de guidage (2) comprennent au moins deux parties (2a, 2b) ayant des sections décroissantes, à savoir une première partie (2a) en amont d'une seconde partie (2b) ayant une section plus faible que la première.

Notons que deux moyens de guidage (2) délimitent un espace central dans lequel est localisé au moins un moyen de positionnement (7) d'au moins une bande de papier (10).

Précisons qu'un moyen de positionnement (7) conforme au moins une bande de papier (10) dans un espace central, entre deux moyens de guidage (2).

Plus précisément un moyen de positionnement (7) conforme tous les pans en correspondance de ce moyen de positionnement (7), à savoir au moins deux pans d'au moins une bande de papier (10) les uns en regard des autres, de préférence conforme les pans les uns contre les autres.

Selon un mode d'exécution, au moins un moyen de positionnement (7) conforme au moins une bande de papier (10) en direction d'un moyen de froissement (4).

Selon le mode de réalisation illustré, un moyen de positionnement (7) conforme au moins une bande de papier (10) en direction d'un moyen d'entraînement (3) puis d'un moyen de froissement (4), tous deux localisés dans un espace central entre deux moyens de guidage (2), à savoir qu'un moyen de positionnement (7), un moyen d'entraînement (3) et un moyen de froissement (4) sont alignés le long d'un espace central.

Selon le mode de réalisation précédent, le moyen d'entraînement (3) est localisé entre les premières parties (2a) des moyens de guidage (2), tandis que le moyen de froissement (4) est agencé entre les secondes parties (2b) des moyens de guidage (2).

En d'autre terme, au moins un moyen de positionnement (7) conforme au moins une bande de papier (10) en amont du moyen de froissement (4), préférentiellement en amont du moyen d'entraînement (3), avantageusement de telle manière à ce qu'au moins une bande de papier (10) s'enroule sensiblement à la périphérie de chacun des moyens de guidage (2).

Le positionnement du moyen de froissement (4) au niveau des secondes parties (2b) des moyens de guidage (2), permet d'obtenir des zones froissées ayant des hauteurs plus importantes que si l'opération de froissement était réalisée sur un profilé longitudinal ayant une section constante. Ces zones froissées ont une meilleure résistance à la compression que si elles étaient uniquement froissées partiellement à la périphérie des conduits.

Précisons que le moyen de froissement (4) est avantageusement un moyen qui ralentit ou qui entraîne au moins une bande de papier (10) à une vitesse inférieure à celle du moyen d'entraînement (3).

Selon le mode de réalisation illustré un moyen de froissement (4) se présente sous la forme de l'association de deux roues crantées dont les crans respectifs de chacune des roues sont décalés, afin que les roues n'entrent pas en contact.

Selon le mode de réalisation précédent, les roues crantées sont reliées mécaniquement et sont entraînées par un unique moteur, ce qui évite également que les roues rentrent en contact et endommage le dispositif.

Précisons également que plus la différence de vitesse est importante entre un moyen d'entraînement (3) et un moyen de froissement (4) et plus les plis sont concentrés. Un plus grand nombre de plis améliore la résistance à la compression transversale.

Selon le mode de réalisation illustré, un moyen d'entraînement (3) comprend un train avant (3b) et un train arrière (3a) qui comprennent chacun une roue d'entraînement munie d'une paire de roulement.

Selon une caractéristique, une roue d'entraînement est mise en contact contre les roulements qui lui sont associés par une force verticale exercée par des ressorts.

Selon la caractéristique précédente, les pans d'au moins une bande de papier (10), à savoir au moins deux pans, sont entraînés par la mise sous contrainte entre les roues d'entraînement et les roulements, et la mise en mouvement des trains avant (3b) et arrière (3a).

Le train avant (3b) est accouplé à un moteur, tandis que le train arrière est accouplé à ce même moteur par l'intermédiaire d'un embrayage et/ou d'un moyen de freinage, tel qu'un frein magnétique.

Notons que le train avant (3b) est localisé en aval du train arrière (3a).

Ce mode de fonctionnement du moyen d'entraînement (3) permet lors d'un débrayage ou d'un freinage du train arrière (3a) de couper un élément de calage et d'emballage (9) selon une longueur déterminée par la rupture d'au moins une bande de papier (10) le long des zones de pré-découpe.

Selon le mode de réalisation illustré, le dispositif de distribution (1) comprend également au moins trois cellules de détection, à savoir une première cellule en amont du train arrière (3a), une seconde cellule entre les deux trains (3a, 3b), ainsi qu'une troisième cellule entre le train avant (3b) et le moyen de froissement (4). La présence de ces cellules de détection permet de déterminer la position d'au moins une bande de papier (10), d'animer les moteurs, embrayages et freins en fonction des demandes.

Selon un mode d'exécution particulier, non représenté, un moyen d'entraînement (3) et au moins un moyen de froissement (4) sont représentés respectivement par un train arrière (3a) et un train avant (3b), dans lesquels le train avant (3b) est mû à une vitesse inférieure à celle du train arrière (3a).

Selon une caractéristique, le dispositif de distribution (1) comprend un moyen de conformation (5) d'au moins une bande de papier (10) autour de la périphérie extérieure d'au moins deux moyens de guidage (2), en amont de ces derniers.

Ce moyen de conformation (5) présente une entré et une sortie permettant à au moins une bande de papier (10) de s'enrouler autour des moyens de guidage (2).

Selon le mode de réalisation illustré, le moyen de conformation (5) comprend un passage d'au moins une bande de papier (10), qui se présente par un chemin (6) fermé qui permet l'enroulement d'au moins une bande de papier (10) sur elle-même, à savoir que les extrémités d'une bordure du chemin (6) se chevauchent avantageusement de manière décalée.

Selon un autre mode de réalisation, le moyen de conformation (5) se présente par un chemin (6) fermé dont ses extrémités sont localisées latéralement d'un même coté, à savoir que le chemin (6) se présente sous une forme de C écrasé.

Notons que les extrémités amonts des moyens de guidage (2) sont fixées ou moulées au moyen de conformation (5).

Plus précisément, tel qu'illustré à la figure 2, les extrémités amonts des moyens de guidage (2) sont localisées à l'intérieur de l'espace agencé par le chemin (6) du moyen de conformation (5) d'au moins une bande de papier (10).

Selon une caractéristique supplémentaire, un moyen d'insertion (8) est ajouté en amont du moyen de conformation (5), afin de faciliter le positionnement d'au moins une bande de papier (10) dans ce dernier, plus précisément de faciliter l'insertion d'au moins une bande de papier (10) dans le chemin (6) du moyen de conformation (5), qui à son tour facilite le positionnement d'au moins une bande de papier (10) autour des moyens de guidage (2).

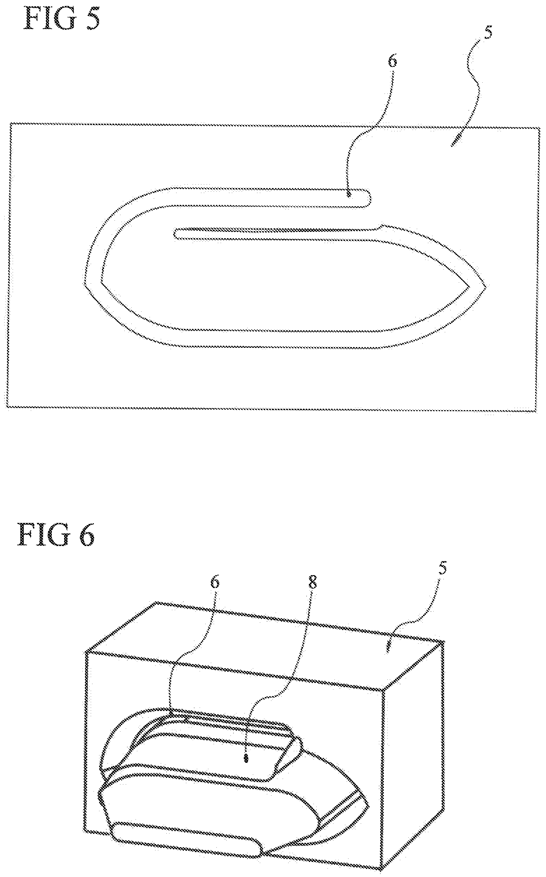

Selon un mode de réalisation, notamment illustré à la figure 6, le moyen d'insertion (8) se présente sous la forme d'une rampe, qui est une extension vers l'extérieur du chemin (6) du moyen de conformation (5).

En d'autre terme, le moyen d'insertion (8) est un profilé dirigé vers l'extérieur, dans le prolongement du chemin (6).

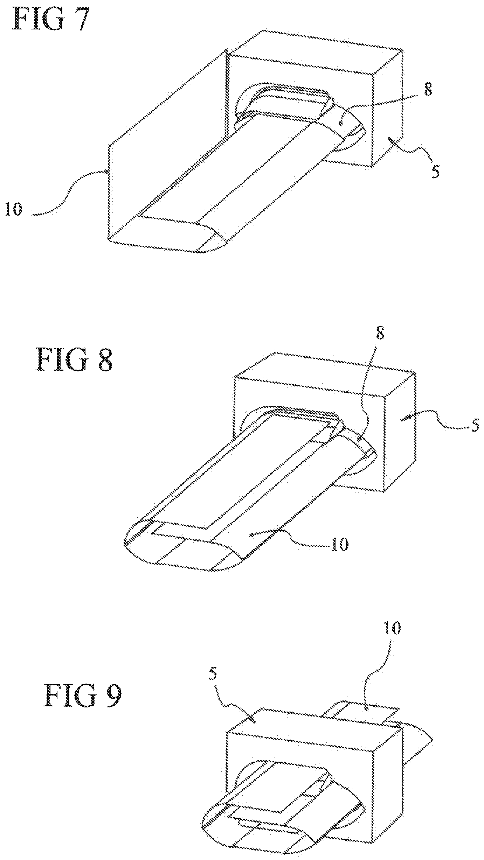

Tel qu'illustré aux figures 7 à 9, un pan latéral de la bande de papier (10) est inséré en regard et en butée contre l'extrémité intérieure du chemin (6), plus précisément est présenté contre le partie de profilé du moyen d'insertion (8) agencée dans le prolongement de l'extrémité intérieure du chemin (6), tandis que l'autre pan latéral de la bande de papier est engagé contre la partie du profilé du moyen d'insertion (8) agencée dans le prolongement de l'extrémité extérieure du chemin (6), de telle manière à insérer sans difficulté la bande de papier dans le moyen de conformation (5).

Un élément de calage et d'emballage (9) selon l'invention est destiné avantageusement à s'enrouler autour d'au moins une partie d'un article à protéger, qui est préalablement ou postérieurement placé dans un carton. Il est entendu qu'un élément de calage et d'emballage (9) peut être également disposé au fond et/ou au-dessus du ou des articles à protéger.

Ajoutons que l'élément de calage et d'emballage (9) selon l'invention est réalisé en papier froissé et se présente par au moins une zone de liaison (12) délimitée par deux conduits longitudinaux (11).

Précisons que les conduits longitudinaux (11) ont un profil général régulier, dont la forme dépend de celle des moyens de guidage (2) employés.

Il est entendu que les conduits longitudinaux (11) sont froissés à leurs périphéries, cependant leurs profils généraux correspondent à ceux des moyens de guidage (2).

Le fait que les conduits longitudinaux (11) conservent un profil général régulier, tout en étant froissés à leurs périphéries, permet d'obtenir des propriétés mécaniques améliorées, en terme de résistance notamment à une compression radiale, à savoir une direction perpendiculaire à la direction longitudinale de l'élément de calage et d'emballage selon l'invention.

Il est entendu par profil général régulier un profil ayant une section générale cylindrique, oblongue, parallélépipédique, voire triangulaire, tout en étant froissé à sa périphérie.

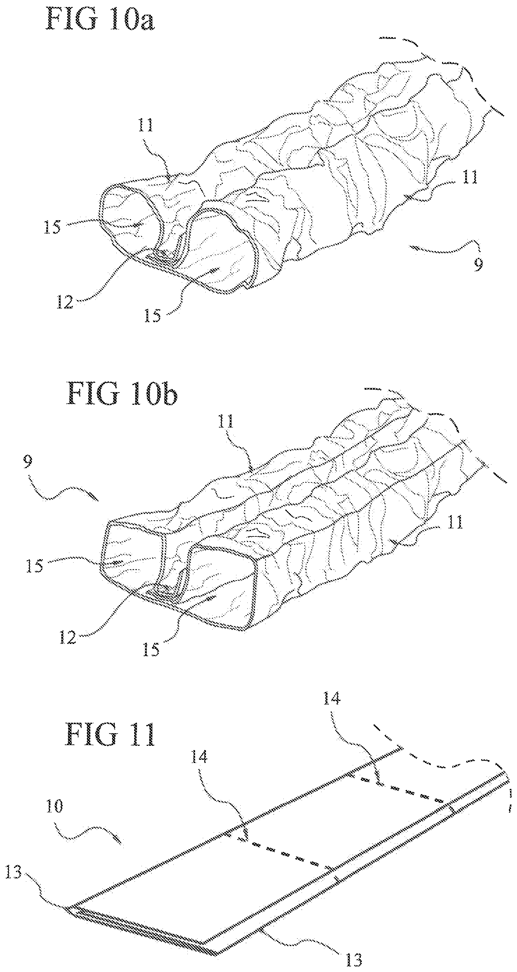

Selon une caractéristique complémentaire, telle qu'illustrée aux figures 10a et 10b, les conduits longitudinaux (11) comprennent un corps creux (15) continu correspondant aux profils des secondes parties (2b) des moyens de guidage (2), à savoir correspondant à un profilé intérieur délimité par les extrémités intérieurs des plis localisés à la périphérie des conduits longitudinaux (11).

Selon la caractéristique précédente, un corps creux (15), à savoir un profilé intérieur, a une section constante ou sensiblement constante sur l'intégralité ou sensiblement l'intégralité de son profilé longitudinal, égale ou sensiblement égale à celle d'une seconde partie (2b) d'un moyen de guidage (2).

Précisons que le profil d'un corps creux (15) est inclus dans celui du conduit longitudinal (11) dans lequel il est logé.

Précisons également qu'un corps creux (15) se présente par un profilé ayant une section transversale de forme choisie parmi circulaire, rectangulaire, carrée, oblongue, triangulaire ou hexagonale.

La présence d'un corps creux (15) apporte non seulement, pour une même quantité de papier, un volume plus important à la structure résultante, mais également apporte un renforcement à la structure par effet de voûte par répartition des contraintes le long de sa périphérie.

Afin d'obtenir sa forme définitive, un élément de calage et d'emballage (9) selon l'invention ne comprend avantageusement pas de moyen de fixation tel que par perforation, collage ou par l'utilisation d'agrafe, autre que des moyens de liaison par froissement, le long d'au moins une zone de liaison (12), d'au moins une feuille de papier.

Notons qu'un élément de calage et d'emballage (9) est constitué d'au moins une feuille de papier, de préférence constitué d'une feuille de papier, enroulée sur elle-même et froissée au moins longitudinalement au moins au niveau d'une zone de liaison (12).

Précisons qu'une zone de liaison (12) est uniquement froissée de manière régulière tout du long de son profil longitudinal.

Selon une caractéristique, une zone de liaison (12) est plus froissée que les conduits longitudinaux (11) qui la délimitent.

Selon la caractéristique précédente, la structure particulière d'un élément de calage selon l'invention apporte une résistance améliorée aux écrasements radiaux.

Une zone de liaison (12) constitue un moyen de fixation d'au moins deux pans de feuille, assurant l'unique moyen de maintien de la forme d'au moins une feuille de papier résultant en un élément de calage et d'emballage (9).

Précisons qu'un élément de calage et d'emballage (9) est obtenu à partir d'au moins une bande de papier (10) enroulée dans laquelle au moins deux pans, de préférence au moins trois pans de la bande se chevauchent et sont froissés selon au moins une zone de liaison (12) longitudinale ou sensiblement longitudinale, voire rectiligne ou sensiblement rectiligne, tandis que la bande de papier (10) froissée est ensuite découpée en feuille de papier froissée à la longueur désirée, de préférence découpée le long de lignes de perforation transversales.

Ainsi, selon une caractéristique, une bande de papier (10) comprend des zones de pré-découpe, se présentant par des lignes de perforation agencées transversalement, qui sont régulièrement réparties sur la longueur de la bande de papier (10).

En d'autre terme, un élément de calage (9) se présente par au moins une feuille de papier enroulée sur elle-même et froissée le long d'au moins une zone de liaison (12) avantageusement longitudinale ou sensiblement longitudinale, voire rectiligne ou sensiblement rectiligne, dans laquelle tous les pans de feuille enroulés en correspondance d'au moins une zone de liaison (12) sont froissés au sein de cette zone de liaison (12), de manière à former de part et d'autre d'au moins une zone de liaison (12), des conduits longitudinaux (11) dont les profils généraux sont orientés suivant le profil général de la zone de liaison (12).

Précisons également qu'au moins une zone de liaison (12) est parallèle ou sensiblement parallèle aux extrémités latérales de l'élément de calage et d'emballage (9).

Il est entendu qu'étant donné que le papier est froissé, c'est le profil général d'une zone de liaison (12) qui est parallèle ou sensiblement parallèle aux extrémités latérales de l'élément de calage et d'emballage (9).

Précisons également que les conduits longitudinaux (11) délimitant une zone de liaison (12), sont également parallèles ou sensiblement parallèle à cette dernière et aux extrémités latérales de l'élément de calage et d'emballage (9).

Il est également entendu qu'étant donné que le papier est froissé, ce sont les profils généraux des conduits longitudinaux (11) qui sont parallèles ou sensiblement parallèles au profil général de la zone de liaison (12) et aux extrémités latérales de l'élément de calage et d'emballage (9).

Selon une caractéristique une feuille de papier froissée enroulée sur elle-même comprend au moins une zone de liaison (12) d'au moins deux pans, voire trois pans de feuille.

Selon des modes de réalisation, un élément de calage et d'emballage (9) formé d'au moins deux feuilles de papier est obtenu à partir de la superposition d'au moins deux bandes de papier (10) pré-pliées ou non.

A titre d'exemple un élément de calage et d'emballage (9) peut présenter deux, trois, quatre ou cinq conduits longitudinaux (11) adjacents, orientés dans une même direction, délimités par respectivement une, deux, trois ou quatre zone(s) de liaison (12) parallèles ou sensiblement parallèles, tout du moins parallèle(s) aux extrémités latérales de l'élément de calage et d'emballage (9).

Selon une caractéristique, les extrémités longitudinales des conduits longitudinaux (11), à savoir les extrémités au niveau desquelles la bande de papier (10) est découpée, sont ouvertes vers l'extérieur.

Selon un mode de réalisation, non illustré, les extrémités longitudinales d'un élément de calage et d'emballage (9) ne sont pas froissées, tout du moins sensiblement pas froissées et délimitent une zone centrale froissée dans laquelle le volume intérieur est plus important qu'aux extrémités longitudinales.

Selon le mode de réalisation illustré, un élément de calage et d'emballage (9) illustré est obtenu à partir d'au moins un consommable qui se présente sous la forme d'une bande de papier (10) pré-pliée en trois pans.

Selon le mode de réalisation précédent, un élément de calage et d'emballage (9) formé d'au moins une feuille de papier froissée est obtenu à partir d'au moins une bande de papier (10) pré-pliée par deux lignes de pliure longitudinales (13) délimitant trois pans de feuilles dont les pans latéraux se chevauchent au moins partiellement.

Notons qu'une bande de papier (10) est pré-pliée de telle manière à ce que ses extrémités latérales soient rabattues sur la face supérieure de sa portion centrale, de manière à ce qu'elles se chevauchent.

En d'autre terme, la bande de papier (10) pré-pliée est délimitée en trois pans, à savoir un pan central et deux pans latéraux, les extrémités extérieures des pans latéraux étant adjacents, de telle manière à ce qu'un premier pan latéral est plié sur le pan central, tandis que le second pan latéral est plié sur le premier pan latéral.

Selon une caractéristique, la bande de papier (10) pré-pliée comprend des zones de pré-découpe (14) régulièrement réparties sur sa longueur.

Selon la caractéristique précédente, les zones de pré-découpe (14) s'étendent d'un bord à l'autre de la bande de papier (10) pré-pliée, à savoir de chacune des extrémités extérieures des pans latéraux.

## Revendications

1. Dispositif de distribution (1) d'élément de calage et d'emballage (9) à partir d'au moins une bande de papier (10), comprenant :
- au moins deux moyens de guidage longitudinaux (2) autour desquels au moins une bande de papier (10) est enroulée,
- au moins un moyen d'entraînement (3) d'au moins une bande de papier (10), et
- au moins un moyen de froissement (4) d'au moins une bande de papier (10),
**caractérisé en ce que** les moyens de guidage longitudinaux (2) s'étendent au-delà, à savoir en aval, d'au moins un moyen de froissement (4).

2. Dispositif de distribution (1) selon la revendication précédente, **caractérisé en ce que** les moyens de guidage longitudinaux (2) sont des profilés longitudinaux.

3. Dispositif de distribution (1) selon l'une quelconque des revendications précédentes, **caractérisé en ce qu'**il comprend un moyen de conformation (5) en amont des moyens de guidage longitudinaux (2), qui permet le positionnement d'au moins une bande de papier (10) autour desdits au moins deux moyens de guidage longitudinaux (2).

4. Dispositif de distribution (1) selon la revendication précédente, **caractérisé en ce que** le moyen de conformation (5) se présente par un chemin (6) fermé dont ses extrémités se chevauchent.

5. Dispositif de distribution (1) selon la revendication 3, **caractérisé en ce que** le moyen de conformation (5) se présente par un chemin (6) fermé dont ses extrémités sont localisées latéralement d'un même coté, à savoir que le chemin (6) se présente sous une forme de C.

6. Dispositif de distribution (1) selon la revendication 4 ou 5, **caractérisé en ce que** les moyens de guidages longitudinaux (2) sont compris dans l'espace intérieur délimité par le chemin (6).

7. Dispositif de distribution (1) selon l'une quelconque des revendications 3 à 6, **caractérisé en ce qu'**il comprend un moyen d'insertion (8) de la bande de papier (10) en amont du moyen de conformation (5).

8. Dispositif de distribution (1) selon la revendication précédente, **caractérisé en ce que** le moyen d'insertion (8) se présente par un profilé dirigé vers l'extérieur, dans le prolongement du chemin (6).

9. Dispositif de distribution (1) selon l'une quelconque des revendications précédentes, **caractérisé en ce qu'**il comprend au moins un moyen de positionnement (7) qui est destiné à contraindre au moins une partie d'au moins une bande de papier (10) entre deux moyens de guidage longitudinaux (2).

10. Dispositif de distribution (1) selon la revendication précédente, **caractérisé en ce que** l'extrémité inférieure du moyen de positionnement (7) est localisée ou sensiblement localisé en correspondance des extrémités inférieures des moyens de guidage longitudinaux (2).

11. Dispositif de distribution (1) selon l'une quelconque des revendications précédentes, **caractérisé en ce qu'**au moins un moyen d'entraînement (3) est localisé entre deux moyens de guidage longitudinaux (2).

12. Dispositif de distribution (1) selon l'une quelconque des revendications précédentes, **caractérisé en ce qu'**au moins un moyen de froissement (4) est localisé entre deux moyens de guidage longitudinaux (2).

13. Dispositif de distribution (1) selon l'une quelconque des revendications précédentes, **caractérisé en ce que** les moyens de guidage longitudinaux (2) comprennent deux parties (2a, 2b) de deux sections différentes, la plus petite section étant localisée en aval de la plus grande section.

14. Dispositif de distribution (1) selon l'une quelconque des revendications précédentes, **caractérisé en ce qu'**un moyen d'entraînement (3) comprend un train arrière (3a) et un train avant (3b) en aval du train arrière (3a), tous deux en amont du moyen de froissement (4).

15. Procédé de production d'élément de calage et d'emballage (9) en papier froissé au moyen d'un dispositif selon l'une des revendications 1 à 14, comprenant les étapes suivantes :
- Installation d'au moins une bande de papier (10) en périphérie d'au moins deux moyens de guidage longitudinaux (2),
- Positionnement d'une partie de la bande de papier (10) entre les moyens de guidage longitudinaux (2),
- Mise en mouvement de la bande de papier (10) le long des moyens de guidage longitudinaux (2), et
- Froissement de la bande de papier (10),

## Patentansprüche

1. Vorrichtung (1) zum Abgeben von Polster- und Verpackungselementen (9) aus mindestens einer Papierbahn (10), umfassend:
- mindestens zwei Längsführungsmittel (2), um die mindestens eine Papierbahn (10) gewickelt ist,
- mindestens ein Antriebsmittel (3) der mindestens einen Papierbahn (10) und
- mindestens ein Faltenbildungsmittel (4) der mindestens einen Papierbahn (10),
**dadurch gekennzeichnet, dass** sich die Längsführungsmittel (2) über das mindestens eine Faltenbildungsmittel (4) hinaus, d. h. stromabwärts davon, erstrecken.

2. Abgabevorrichtung (1) nach dem vorhergehenden Anspruch, **dadurch gekennzeichnet, dass** die Längsführungsmittel (2) Längsprofile sind.

3. Abgabevorrichtung (1) nach einem der vorhergehenden Ansprüche, **dadurch gekennzeichnet, dass** sie ein Formgebungsmittel (5) stromaufwärts der Längsführungsmittel (2) umfasst, das die Positionierung der mindestens einen Papierbahn (10) um die mindestens zwei Längsführungsmittel (2) ermöglicht.

4. Abgabevorrichtung (1) nach einem der vorhergehenden Ansprüche, **dadurch gekennzeichnet, dass** das Formgebungsmittel (5) die Form eines geschlossenen Pfads (6) mit überlappenden Enden aufweist.

5. Abgabevorrichtung (1) nach Anspruch 3, **dadurch gekennzeichnet, dass** das Formgebungsmittel (5) die Form eines geschlossenen Pfads (6) aufweist, dessen Enden sich seitlich auf der gleichen Seite befinden, d. h. der Pfad (6) C-förmig ist.

6. Abgabevorrichtung (1) nach Anspruch 4 oder 5, **dadurch gekennzeichnet, dass** die Längsführungsmittel (2) in dem durch den Pfad (6) begrenzten Innenraum umfasst sind.

7. Abgabevorrichtung (1) nach einem der Ansprüche 3 bis 6, **dadurch gekennzeichnet, dass** sie ein Einführmittel (8) der Papierbahn (10) stromaufwärts des Formgebungsmittels (5) umfasst.

8. Abgabevorrichtung (1) nach dem vorhergehenden Anspruch, **dadurch gekennzeichnet, dass** das Einführmittel (8) die Form eines nach außen gerichteten Profils in der Verlängerung des Pfads (6) annimmt.

9. Abgabevorrichtung (1) nach einem der vorhergehenden Ansprüche, **dadurch gekennzeichnet, dass** sie mindestens ein Positionierungsmittel (7) umfasst, das dazu vorgesehen ist, zumindest einen Abschnitt der mindestens einen Papierbahn (10) zwischen zwei Längsführungsmitteln (2) einzuklemmen.

10. Abgabevorrichtung (1) nach dem vorhergehenden Anspruch, **dadurch gekennzeichnet, dass** das untere Ende des Positionierungsmittels (7) in Entsprechung mit den unteren Enden der Längsführungsmittel (2) angeordnet oder im Wesentlichen angeordnet ist.

11. Abgabevorrichtung (1) nach einem der vorhergehenden Ansprüche, **dadurch gekennzeichnet, dass** sich das mindestens eine Antriebsmittel (3) zwischen zwei Längsführungsmitteln (2) befindet.

12. Abgabevorrichtung (1) nach einem der vorhergehenden Ansprüche, **dadurch gekennzeichnet, dass** sich das mindestens eine Faltenbildungsmittel (4) zwischen zwei Längsführungsmitteln (2) befindet.

13. Abgabevorrichtung (1) nach einem der vorhergehenden Ansprüche, **dadurch gekennzeichnet, dass** die Längsführungsmittel (2) zwei Teile (2a, 2b) mit zwei unterschiedlichen Querschnitten umfassen, wobei sich der kleinere Querschnitt stromabwärts des größeren Querschnitts befindet.

14. Abgabevorrichtung (1) nach einem der vorhergehenden Ansprüche, **dadurch gekennzeichnet, dass** ein Antriebsmittel (3) eine Hinterachse (3a) und eine Vorderachse (3b) stromabwärts der Hinterachse (3a) umfasst, die sich beide stromaufwärts des Faltenbildungsmittels (4) befinden.

15. Verfahren zur Herstellung eines Polster- und Verpackungselements (9) aus geknülltem Papier mittels einer Vorrichtung nach einem der Ansprüche 1 bis 14, umfassend die folgenden Schritte:
- Auflegen mindestens einer Papierbahn (10) auf den Umfang mindestens zweier Längsführungen (2),
- Positionieren eines Abschnitts der Papierbahn (10) zwischen den Längsführungsmitteln (2),
- Bewegen der Papierbahn (10) entlang der Längsführungsmittel (2) und
- Falten der Papierbahn (10).

## Claims

1. Device (1) for dispensing cushioning and packaging elements (9) from at least one paper web (10), comprising:
- at least two longitudinal guiding means (2) around which at least one paper web (10) is wound,
- at least one drive means (3) of the at least one paper web (10), and
- at least one wrinkling means (4) of the at least one paper web (10),
**characterized in that** the longitudinal guide means (2) extend beyond, i.e. downstream of, the at least one wrinkling means (4).

2. Dispensing device (1) according to the preceding claim, **characterized in that** the longitudinal guiding means (2) are longitudinal profiles.

3. Dispensing device (1) according to any of the preceding claims, **characterized in that** it comprises a shaping means (5) upstream of the longitudinal guide means (2), which enables the positioning of the at least one paper web (10) around said at least two longitudinal guide means (2).

4. Dispensing device (1) according to the preceding claim, **characterized in that** the shaping means (5) is in the form of a closed path (6) with overlapping ends.

5. Dispensing device (1) according to claim 3, **characterized in that** the shaping means (5) is the form of a closed path (6) whose ends are located laterally on the same side, i.e. the path (6) is C-shaped.

6. Dispensing device (1) according to claim 4 or 5, **characterized in that** the longitudinal guiding means (2) are included in the internal space delimited by the path (6).

7. Dispensing device (1) according any one of claims 3 to 6, **characterized in that** it comprises an insertion means (8) of the paper web (10) upstream of the shaping means (5).

8. Dispensing device (1) according to the preceding claim, **characterized in that** the insertion means (8) takes the form of an outwardly directed profile in the extension of the path (6).

9. Dispensing device (1) according to any of the preceding claims, **characterized in that** it comprises at least one positioning means (7) which is intended to constrain at least a portion of the at least one paper web (10) between two longitudinal guiding means (2).

10. Dispensing device (1) according to the preceding claim, **characterized in that** the lower end of the positioning means (7) is located or substantially located in correspondence with the lower ends of the longitudinal guiding means (2).

11. Dispensing device (1) according to any of the preceding claims, **characterized in that** at least one drive means (3) is located between two longitudinal guiding means (2).

12. Dispensing device (1) according to any of the preceding claims, **characterized in that** at least one wrinkling means (4) is located between two longitudinal guiding means (2).

13. Dispensing device (1) according to any of the preceding claims, **characterized in that** the longitudinal guiding means (2) comprise two parts (2a, 2b) of two different cross-sections, the smaller cross-section being located downstream of the larger cross-section.

14. Dispensing device (1) according to any of the preceding claims, **characterized in that** a drive means (3) comprises a rear axle (3a) and a front axle (3b) downstream of the rear axle (3a), both upstream of the wrinkling means (4).

15. Method of producing a crumpled paper cushioning and packaging element (9) by means of a device according to one of the claims 1 to 14, comprising the following steps:
- Installation of at least one paper web (10) on the periphery of at least two longitudinal guiding means (2),
- Positioning of a portion of the paper web (10) between the longitudinal guiding means (2),
- Moving the paper web (10) along the longitudinal guiding means (2), and
- Wrinkling of the paper web (10),
